# FASCICULE DE BREVET EUROPEEN

(11) **EP 2 655 051 B1**
(45) Date de publication et mention de la délivrance du brevet: **31.08.2016**
(21) Numéro de dépôt: 11817361.6
(22) Date de dépôt: 16.12.2011
(51) Int. Cl.: B29D 30/24

(54) **SUPPORT A CAME POUR L'ASSEMBLAGE D'UNE EBAUCHE CRUE DE PNEUMATIQUE**
NOCKENTRÄGER ZUM AUFBAUEN EINES REIFENROHLINGS
CAM SUPPORT FOR ASSEMBLING A GREEN TYRE

(30) Priorité: 20.12.2010 FR 1060833
(43) Date de publication de la demande: 30.10.2013
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: ASTIER, Cédric, F-63040 Clermont-Ferrand Cedex 9 (FR)
(74) Mandataire: Noel, Luminita
(86) Numéro de dépôt international: PCT/FR2011/053016
(87) Numéro de publication internationale: WO 2012/085403

(56) Documents cités:
- FR-A1- 2 939 711
- JP-A- 2007 136 935
- JP-A- 2007 185 888
- US-A- 4 673 457
- US-A1- 2007 095 481

## Description

L'invention concerne la fabrication des pneumatiques de roue et en particulier l'assemblage de l'ébauche crue du pneumatique.

La demande FR-2 939 711 au nom de la demanderesse divulgue un support pour l'assemblage d'une ébauche crue de pneumatique. Le support comprend une embase de forme générale cylindrique qui porte sur sa circonférence des organes de formage identiques entre eux. Chaque organe comprend une série d'éléments externes montés à coulissement indépendamment les uns des autres par rapport à un socle de l'organe suivant une direction radiale à l'axe de l'embase. Les faces externes circonférentielles des éléments forment une surface de support pour l'assemblage des pièces servant à la constitution de l'ébauche. La position de chaque élément par rapport au socle est définie en enfilant dans l'organe une came contre laquelle les éléments viennent en appui. La came présente un galbe identique au galbe que l'on souhaite donner à la surface de support de l'ébauche. Si l'on souhaite changer la forme de cette surface, par exemple en accentuant ou en réduisant le galbe, il suffit de remplacer chaque came par une came produisant la forme adaptée. Ce support d'assemblage est donc à géométrie variable et peut servir à lui seul pour l'assemblage de différents types d'ébauches destinées à la fabrication de modèles de pneumatiques différents.

Toutefois, ce support a pour inconvénient de nécessiter un ensemble de plusieurs dizaines de cames pour chaque forme de la surface d'appui offerte par le support. Ce nombre de cames est donc multiplié par le nombre de surfaces différentes que l'on souhaite pouvoir définir. Il faut donc disposer d'une installation permettant de stocker de façon ordonnée tous ces ensembles de cames, et de les obtenir et de les restituer avant et après montage sans les permuter faute de quoi la surface serait irrégulière.

Un but de l'invention est de faciliter l'utilisation du support.

A cet effet, on prévoit selon l'invention un organe d'assemblage d'une ébauche crue de pneumatique comme défini dans la revendication 1, organe qui comprend :
- des moyens de fixation à une embase,
- un socle,
- des éléments externes montés mobiles par rapport au socle, et
- au moins une came apte à occuper une position quelconque parmi au moins deux positions qui sont l'image l'une de l'autre par une rotation, dans lesquelles la came définit des positions des éléments par rapport au socle et telles que, pour au moins certains des éléments, les positions de l'élément associées aux positions respectives de la came sont différentes l'une de l'autre.

On prévoit aussi selon l'invention un support d'assemblage d'une ébauche crue de pneumatique comme défini dans la revendication 2, support qui comprend une embase à symétrie de révolution et des organes selon la revendication 1 fixés à l'embase.

Des formes préférentielles de l'invention sont définies dans les autres revendications dépendantes.

Ainsi, la même came peut servir à donner au moins deux positions différentes aux éléments de l'organe. On peut donc avec un seul jeu de cames donner au moins deux formes différentes à la surface externe du support. Par conséquent, on simplifie la gestion et la manipulation de l'ensemble des cames.

De préférence, chaque organe est agencé de sorte que les positions de la ou chaque came sont l'image l'une de l'autre par une rotation autour d'un axe de la came.

Ainsi, quelle que soit la position dans laquelle la came est placée, elle occupe le même logement dans l'organe, ce qui simplifie la réalisation de celui-ci et ne nécessite pas d'augmenter son volume.

De préférence, dans chaque organe, la ou chaque came est montée mobile à rotation par rapport au socle.

Ainsi, la came peut passer de l'une à l'autre des positions sans quitter son logement au sein de l'organe.

Avantageusement, chaque organe est agencé de sorte que, dans au moins une des positions de la ou chaque came, les éléments forment une face de support externe à profil galbé dans un plan radial à un axe principal de l'embase.

De préférence, chaque organe est agencé de sorte que, dans au moins deux positions de la ou chaque came, les éléments forment des faces de support externes respectives différentes à profil galbé dans un plan radial à un axe principal de l'embase.

Avantageusement, chaque organe est agencé de sorte que, dans une des positions de la ou chaque came, les éléments forment une face de support externe à profil rectiligne dans un plan radial à un axe principal de l'embase.

En effet, il est utile de pouvoir disposer sur le support d'une surface d'appui cylindrique, c'est-à-dire sans galbe, pour une partie au moins des opérations de construction de l'ébauche. Cette surface est donc obtenue en utilisant les mêmes cames que pour les autres surfaces.

Avantageusement, chaque organe est agencé de sorte que, dans la position de la ou chaque came associée au profil rectiligne, pour au moins certains des éléments, et de préférence tous les éléments, une distance entre une face externe de l'élément formant la face de support et l'axe de l'embase est inférieure à la distance entre cette face et l'axe lorsque la came occupe au moins une autre des positions.

En effet, il peut être prévu de passer d'une surface cylindrique à une surface galbée pendant qu'une ébauche est portée par le support. On effectue donc différentes opérations d'assemblage de l'ébauche en la faisant supporter successivement par des surfaces ayant des formes différentes. La caractéristique précitée permet alors d'éviter, lors du changement de position des organes, de tendre ou de tendre excessivement la partie de l'ébauche déjà constituée. Si l'on souhaite à cette occasion ne générer aucune tension, on fera en sorte que tous les éléments vérifient la condition sur la distance. Dans le cas contraire, il suffit que certains d'entre eux la vérifie.

Avantageusement, chaque organe comprend des moyens de rappel des éléments en direction de la ou chaque came.

De préférence, chaque organe est agencé de sorte que la ou chaque came, dans au moins une de ses positions, définit un plan de contact avec chaque élément parmi au moins certains des éléments.

Ainsi, on assure un maintien stable et précis de chaque élément au moyen de la came.

De préférence, chaque organe est agencé de sorte que la ou chaque came, dans au moins une de ses positions, présente, pour au moins certains des éléments, une surface de contact avec l'élément.

On peut prévoir que les surfaces de contact sont définies par au moins une face de la came venant en contact avec plusieurs éléments simultanément.

Ainsi, on facilite la réalisation de la came notamment par usinage des faces destinées à définir la position des éléments.

Dans un mode de réalisation, la came est unique dans au moins certains des organes.

Dans un autre mode de réalisation, les cames sont au moins au nombre de deux dans au moins certains des organes, les cames définissant conjointement des positions respectives des mêmes éléments.

Ce mode de réalisation est adapté aux cas dans lesquels les contraintes s'exerçant sur les éléments sont relativement fortes. Ces contraintes sont donc encaissées par deux cames et non une seule.

De préférence, chacun des organes comprenant deux cames comprend des moyens de liaison des cames de l'organe entre elles de sorte qu'une rotation de l'une quelconque des cames par rapport au socle entraîne une rotation de l'autre came par rapport au socle.

Ainsi, à la fois on facilite la manipulation des cames car le changement de position de l'une entraîne celui de l'autre et on sécurise la fabrication en évitant qu'une came occupe une position qui ne correspondrait pas à celle de l'autre.

De préférence, chaque organe comprend une bande flexible par l'intermédiaire de laquelle les éléments sont attachés les uns aux autres.

Ainsi, la bande rend inutile de guider les éléments à coulissement par rapport au socle comme dans l'art antérieur précité. Attachés par la bande, les éléments peuvent s'orienter les uns par rapport aux autres de façon à rendre leurs faces externes localement parallèles les unes aux autres et à éviter de la sorte une configuration en marches d'escalier. On obtient donc sur le support une surface d'appui pour la construction de l'ébauche qui est lisse et exempte d'arête saillante et n'altère donc pas la gomme crue lors de la mise en place des éléments formant l'ébauche.

On prévoit en outre, selon l'invention, un procédé d'assemblage d'une ébauche crue de pneumatique comme défini dans la revendication 15, dans lequel procédé:
- on exécute au moins une opération d'assemblage d'une ébauche crue en contact avec des éléments d'organes comme définis dans au moins l'une quelconque des revendications 1 à 14, organes fixés à une embase à symétrie de révolution d'un support,
- on déplace au moins une came de chaque organe d'une position de départ à une position d'arrivée qui est l'image de la position de départ par une rotation de façon à déplacer au moins certains des éléments par rapport au socle, et
- on exécute une autre opération d'assemblage de l'ébauche sur le support.

D'autres caractéristiques et avantages de l'invention apparaitront encore dans la description suivante de plusieurs modes de réalisation donnés à titre d'exemples non limitatifs en référence aux dessins annexés sur lesquels :
- la figure 1 montre des vues en perspective et en élévation d'un support selon un premier mode de réalisation de l'invention définissant une surface d'appui ;
- la figure 2 montre des vues du support analogues à celles de la figure 1 et dans lesquelles le support définit une autre surface d'appui ;
- les figures 3 à 6 sont quatre vues en perspective de l'un des organes du support de la figure 1 montrant respectivement l'organe complet, l'organe avec quelques éléments ôtés, l'organe avec la plupart des éléments ôtés et le socle de l'organe seul ;
- les figures 7 et 8 sont deux vues respectivement de côté et en coupe longitudinale de l'organe de la figure 3 ;
- la figure 9 est une vue à plus grande échelle de la partie D de l'organe de la figure 8 ;
- les figures 10 et 11 sont des vues respectivement en perspective et en coupe verticale d'un des organes de rappel de l'organe de la figure 7 ;
- les figures 12 à 14 sont des vues en coupe transversale suivant les plans XII-XII, XIII-XIII et XIV-XIV de l'organe de la figure 7;
- les figures 15 à 18 sont des vues analogues aux figures 7 et 12 à 14 illustrant les liaisons cinématiques entre les pièces ;
- la figure 19 est une vue en perspective de la came de l'organe de la figure 8;
- les figures 20 à 24 montrent chacune une vue d'extrémité et une vue en élévation de la came de la figure 19 dans une variante de réalisation et dans des positions de la came différant les unes des autres par la rotation de la came autour de son axe ; et
- les figures 25 à 28 sont des vues analogues respectivement aux figures 1, 3, 14 et 18 montrant un deuxième mode de réalisation du support selon l'invention.

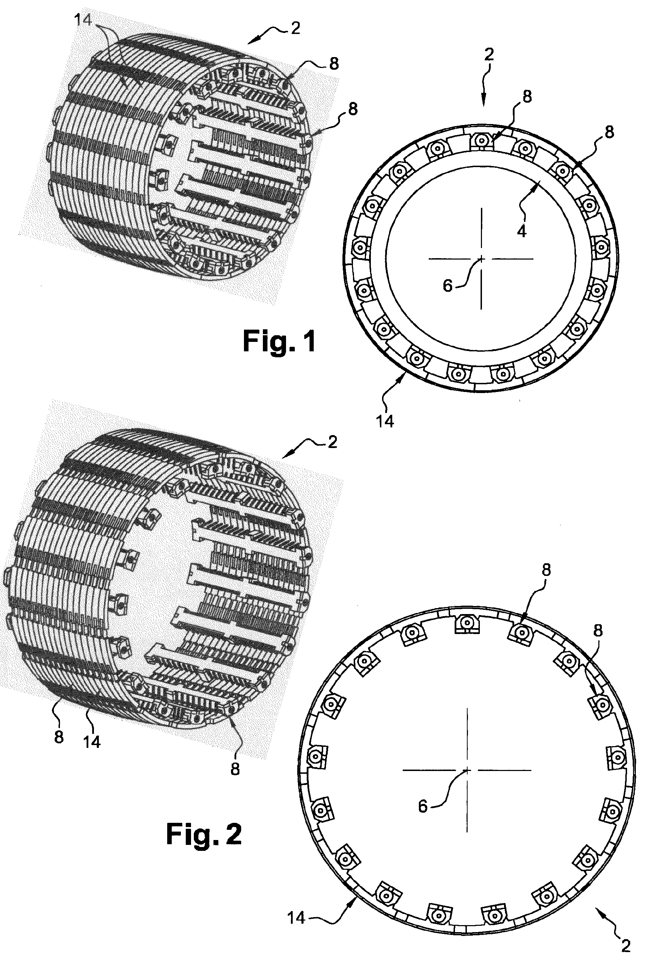

Nous allons présenter dans la suite deux modes de réalisation d'un support servant à la fabrication d'une ébauche crue de pneumatique de roue. Il peut s'agir au choix d'une roue de véhicule de tourisme, de véhicule léger, de véhicule utilitaire, de véhicule du type poids lourd ou encore d'une roue d'un engin de génie civil. Nous allons décrire en référence aux figures 1 à 24 un premier mode de réalisation du support 2.

Le support comprend une embase 4 présentant une forme générale annulaire à symétrie de révolution autour d'un axe 6 qui est ici horizontal. L'embase 4 est d'un type connu et ne sera pas décrite ici plus en détail. Dans toute la suite, la direction radiale est prise, sauf indication contraire, par référence à l'axe 6.

Le support 2 comprend des organes de formage 8, en l'espèce identiques entre eux et fixés à une face externe de l'embase 4. Chaque organe 8 a une forme générale allongée rectiligne parallèle à l'axe 6. Les organes 8 sont disposés avec leurs extrémités longitudinales en coïncidence et sont régulièrement répartis autour de l'axe 6.

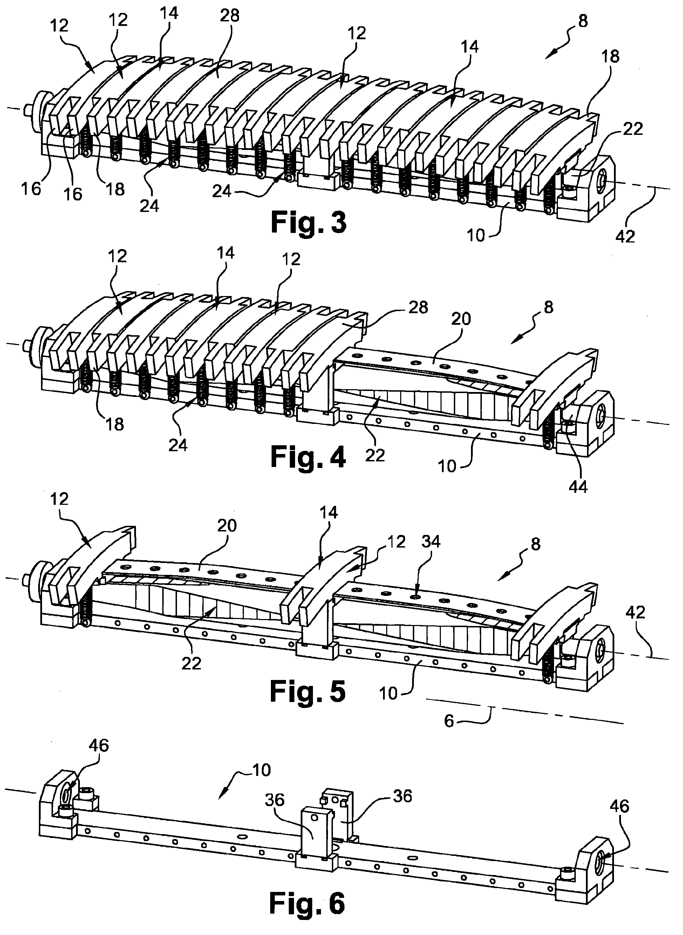

Nous allons décrire dans la suite l'un des organes 8. L'organe comprend un socle 10 représenté en particulier à la figure 6. Le socle a une forme générale rectiligne allongée et constitue un ensemble rigide. L'organe 8 est rigidement fixé à l'embase par son socle 10 et par des moyens de fixation classiques qui ne sont pas décrits ici.

L'organe 8 comprend une série d'éléments externes 12 s'étendant d'un côté du socle opposé à l'embase 4. Les éléments 12 sont, en l'espèce, tous identiques entre eux au sein de l'organe 8. Les éléments 12 se succèdent le long du socle en étant alignés parallèlement à l'axe 6, régulièrement espacés dans la succession et avec leurs bords d'extrémités en coïncidence.

Chaque élément 12 présente un plan de symétrie perpendiculaire à l'axe 6 lorsque les éléments forment une surface d'appui cylindrique comme on le verra plus loin. Chaque élément 12 présente une face externe ou sommet 14 qui constitue la zone de l'organe 8 la plus éloignée de l'axe 6. La face 14 présente une légère courbure dans un plan radial et dans un plan perpendiculaire à l'axe 6. Le sommet 14 a en vue de dessus une forme qui est, en l'espèce, rectangulaire, la longueur du rectangle correspondant à la direction circonférentielle de l'embase 4.

Chaque élément 12 se prolonge d'un côté de l'organe avec deux dents 16 et du côté opposé avec une unique dent 18. Sur le premier côté, les deux dents 16 sont espacées l'une de l'autre suivant la direction de l'axe 6 et prolongent respectivement les grandes faces avant et arrière de l'élément. De l'autre côté, la dent 18 s'étend à distance de ces deux faces. Les trois dents prolongent également le sommet 14.

Les éléments 12 sont disposés de sorte que, de chaque côté de l'organe, chaque dent unique 18 est interposée entre deux couples de dents 16 comme illustré sur la figure 3. Les dents 16 et 18 sont identiques et régulièrement réparties dans la succession sur chaque côté de l'organe.

Grâce à la dissymétrie de chaque organe 8 par référence à un plan longitudinal médian radial, les dents situées d'un côté de l'organe sont aptes à s'étendre entre les dents de l'organe 8 suivant dans la succession le long de la circonférence du support 2. Ainsi, les dents des organes successifs s'interpénètrent. De la sorte, malgré la discontinuité des socles 10 le long de la circonférence de l'embase 4, les organes 8 forment une surface d'appui continue tout le long de la circonférence de l'embase. En particulier, si l'on suit cette surface de l'un à l'autre de ses bords d'extrémité axiale dans un plan radial à l'axe 6, quelle que soit la position de ce plan, on vient toujours en appui sur un ou deux des organes 8.

Et cette propriété est conservée si l'embase 4 est agencée de façon à permettre de faire varier la distance de chaque organe 8 par rapport à l'axe 6. C'est le cas qui a été illustré sur les figures 1 et 2 qui montrent respectivement l'embase en position rétractée et en position étendue. Les embases ayant ce type de caractéristiques sont connues en elles mêmes de sorte qu'il ne sera pas donné davantage de détails ici. En position rétractée, sur la figure 1, les dents 16 et 18 s'interpénètrent étroitement sur la plus grande partie de la longueur des dents mesurée en direction circonférentielle. En position étendue sur la figure 2, ce sont seulement les extrémités des dents qui s'interpénètrent.

Dans chaque organe 8, les éléments 12 sont fixés au socle 10 en étant reliés les uns aux autres par une bande ou clinquant 20. Une came 22 est interposée suivant la direction radiale à l'axe 6 entre le socle 10 d'une part et les éléments 12 d'autre part, sachant que ces derniers sont rappelés en direction du socle par des organes de rappel 24.

La bande 20 est unique pour un même organe 8, propre à ce dernier et commune à tous ses éléments 12. Elle présente une forme plate, allongée et rectangulaire en plan. Il s'agit d'une bande flexible, en l'espèce élastiquement flexible, et non extensible de sorte que sa longueur ne peut pas être augmentée par étirement de la bande. La bande est réalisée par exemple en métal, en l'espèce en acier. La bande 20 s'étend le long du socle 10, à distance de ce dernier et parallèlement à celui-ci suivant une direction parallèle à l'axe 6.

Chaque élément 12 comprend un pied 26 et une tête 28. Le pied 26 est interposé entre la tête et le socle 10 par référence à la direction radiale. La tête 28 définit la face de sommet 14. La tête 28 présente sur sa face orientée en direction de l'axe 6 une cavité 30 à fond plat recevant la bande 20 de sorte que la tête est à cheval sur la bande. La cavité reçoit également le pied 26 si bien que la bande est prise en sandwich entre la tête et le pied en étant interposée entre ceux-ci suivant la direction radiale.

Chaque élément comprend un organe de fixation tel qu'en l'espèce une vis 32 dont la tige traverse suivant la direction radiale un orifice du pied 26, un orifice 34 de la bande et un orifice de la tête 28. La vis est vissée dans l'orifice fileté de la tête de façon à assurer une fixation rigide du pied à la tête et au tronçon de bande interposé entre eux. La tête de la vis est en appui contre le pied.

La bande 20 présente ainsi le long de la bande une succession d'orifices 34 dans les tronçons successifs de la bande auxquels sont fixés les éléments 12 de la série. Les éléments 12 sont donc fermement attachés les uns aux autres par la bande 20. Ces tronçons s'étendent chacun de l'un à l'autre des bords longitudinaux de la bande et à distance d'au moins l'une de ses extrémités axiales, et à distance des deux pour la plupart des tronçons.

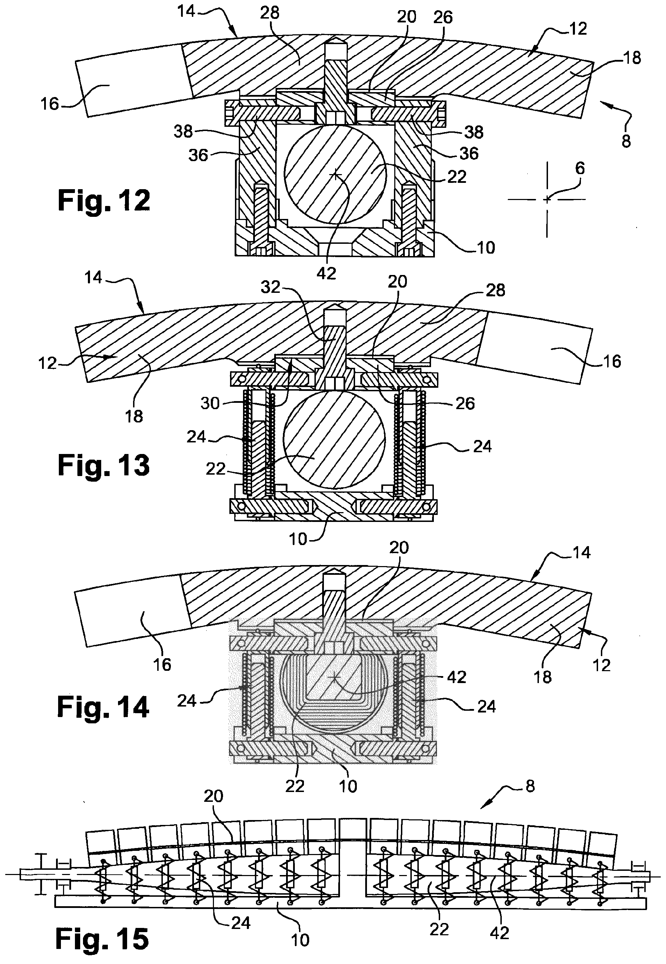

Le nombre d'éléments 12 de la série est, en l'espèce, impair. Dans le présent exemple, l'élément 12 situé au milieu dans la succession est fixé rigidement au socle 10 comme illustré notamment à la figure 12. A cet effet, le socle comprend deux montants 36 dont les extrémités libres sont rigidement fixées au pied 26 de l'élément 12 correspondant, en l'espèce au moyen de vis 38 s'étendant respectivement à travers les montants et le pied 26 parallèlement à la direction de l'axe 6.

Comme dans les autres éléments 12, un tronçon de la bande 20 est rigidement fixé à cet élément. Il s'agit d'un tronçon situé à égale distance des extrémités longitudinales de la bande. La bande est donc rigidement fixée au socle 10 par un tronçon central de la bande et uniquement par ce dernier.

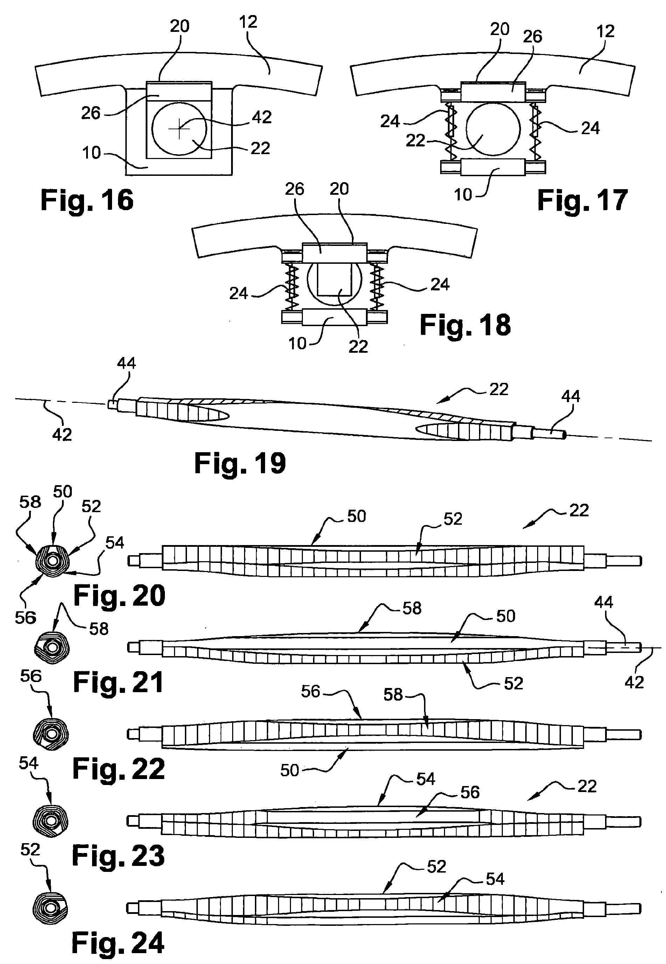

La came 22 est illustrée notamment aux figures 4, 5, 7 à 9 et 12 à 19 ainsi qu'aux figures 20 à 24 mais dans une variante de réalisation. Elle présente une forme allongée dotée d'un axe longitudinal 42 parallèle à l'axe 6. La came est reçue dans l'organe 8 en s'étendant parallèlement au socle 10 et à la succession d'éléments 12 et en étant interposée suivant la direction radiale entre le socle et la succession d'éléments comme illustré notamment aux figures 12 à 14. La came 22 présente deux tronçons d'extrémité longitudinale cylindriques 44 reçus dans des paliers respectifs 46 du socle de sorte que la came est montée mobile à rotation sur le socle autour de son axe 42.

Les organes de rappel 24 sont agencés pour rappeler les éléments 12, à l'exception de l'élément médian précité, en direction de l'axe 6 et donc en contact avec la partie de la came s'étendant en regard des éléments. C'est donc cette partie qui définit la position de chaque élément 12 suivant la direction radiale.

La came 22 présente à cette fin plusieurs portées, en l'espèce au nombre de quatre sur la came des figures 4, 5, 7 à 9 et 12 à 19, et au nombre de cinq, numérotées 50, 52, 54, 56 et 58 sur la came constituant la variante des figures 20 à 24. Sur les figures 20 à 24, les cinq positions respectives de la came sont l'image les unes des autres par une rotation d'un cinquième de tour autour de l'axe 42.

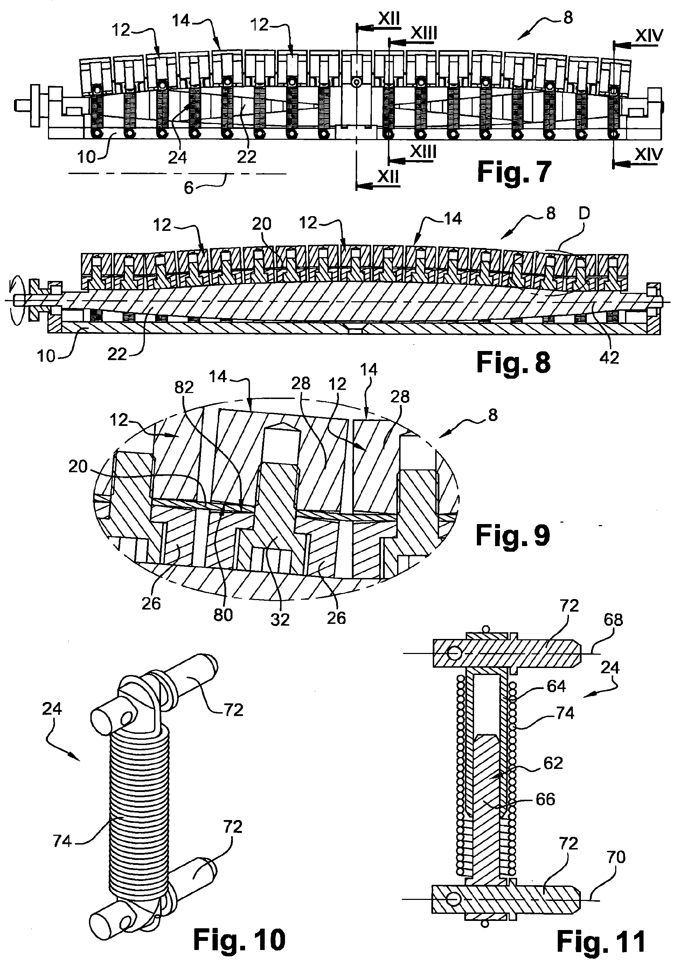

Chaque portée est définie par une ou plusieurs faces se succédant le long de la came. La face interne du pied 26 de chaque élément est plane et localement parallèle à sa face de sommet 14. Le profil de chaque portée dans le plan radial, lorsque cette portée s'étend au sommet de la came et constitue ainsi la portée active, confère un profil analogue à la face d'appui formée en coopération par les sommets 14 des éléments 12 comme illustré notamment à la figure 8.

Dans le présent exemple, l'une 50 des portées est destinée à placer tous les sommets 14 à la même distance radiale de façon à donner au support une forme générale cylindrique. Pour cela, la portée 50 est définie par une face plane parallèle à l'axe 6. Toutes les autres portées 52 à 58 ont une forme galbée, à savoir une forme convexe généralement courbe. Ce galbe correspond au profil de la portée en question dans un plan radial à l'axe 42 c'est-à-dire dans un plan radial à l'axe 6 lorsque la portée est active.

La portée 50 est définie par une unique face plane. La portée 58 est définie par une unique face galbée. La portée 56 est définie par deux faces d'extrémité galbées et une face médiane plane. La portée 54 est définie comme la portée 58 avec toutefois un galbe plus prononcé. Dans le présent exemple, certaines des portées présentent une face plane qui est d'autant plus grande qu'on s'éloigne de l'axe longitudinal de la came.

Les organes de rappel 24 sont prévus par paires de sorte que chaque élément 12 est rappelé par deux organes dédiés situés de chaque côté du socle 10. On compte donc deux fois plus d'organes 24 que d'éléments 12, en rappelant que l'élément 12 central n'est pas mobile par rapport au socle.

Les organes de rappel sont tous identiques. Comme illustré aux figures 10 et 11, chaque organe 24 comprend une armature télescopique 62 comprenant en l'espèce un tube 64 et un coulisseau 66 monté mobile à coulissement dans le tube suivant une direction radiale. Le tube et le coulisseau sont en contact l'un avec l'autre par des faces cylindriques à sections circulaires dans un plan perpendiculaire à la direction de coulissement. L'un des deux éléments de l'armature, en l'espèce le tube, est fixé par une extrémité au pied 26 de l'élément, ici au moyen d'une liaison pivot autour d'un axe 68 parallèle à la bande et perpendiculaire à la direction longitudinale de cette dernière. Pareillement, l'autre élément de l'armature, en l'espèce le coulisseau 66, est relié par une liaison pivot au socle 10 autour d'un axe 70 parallèle à l'axe 68. Chaque liaison pivot est ici matérialisée par un arbre 72 traversant l'élément concerné de l'armature et le pied ou le socle.

Chaque organe de rappel 24 comprend en outre un ressort de tension hélicoïdal 74 qui est ici enfilé de façon concentrique sur l'armature, les extrémités longitudinales du ressort étant fixées rigidement respectivement aux extrémités distales du tube et du coulisseau. Le ressort est agencé pour tendre à rapprocher l'un de l'autre les deux arbres 72, et donc à rapprocher le pied 26 du socle 10.

Grâce à cet agencement, les deux organes 24 tendent donc à maintenir chaque organe 12 en contact avec la portée active de la came qui confère sa forme au sommet de l'organe 8. On peut prévoir que le support comprend une motorisation destinée à faire tourner l'embase, les organes 8 et l'ébauche à une vitesse inférieure ou égale à une limite maximale prédéterminée. Les organes 24 sont prévus, en particulier par le choix de la raideur du ressort 74, pour être aptes à maintenir l'élément 12 en contact avec la came à l'encontre de l'éventuelle sollicitation de flexion exercée par la bande 20 sur l'élément qui tend à l'éloigner de l'axe 6 et cumulativement de la force centrifuge générée par la rotation du support.

On a illustré aux figures 15 à 18 les liaisons cinématiques entre les pièces résultant de la description qui précède. Comme illustré notamment aux figures 12 et 13, la came n'est pas en contact avec le socle sur toute la longueur de la came pour réduire les risques de montage hyperstatique.

Pour modifier la forme de la surface d'appui définie par les sommets 14, il suffit de faire tourner la came 22 autour de son axe 42 de façon à changer la portée avec laquelle les éléments sont en contact et qui définit la position radiale de ceux-ci. La came illustrée aux figures 1 à 19 offre donc quatre positions possibles tandis que la came illustrée aux figures 20 à 24 en offre cinq, à savoir une position dans laquelle le support forme une surface d'appui cylindrique et quatre positions dans lesquelles il offre une surface d'appui galbée, la partie de la surface distante des extrémités axiales étant bombée. C'est donc la même came qui permet de former différentes surfaces d'appui avec l'organe 8.

On peut prévoir un mécanisme à engrenage reliant les unes aux autres les cames 22 des organes respectifs de façon à faire tourner simultanément toutes les cames pour passer d'une forme de surface à l'autre.

Dans chaque position, y compris lorsque la surface est galbée, les éléments 12 forment avec leurs sommets successifs 14 une surface qui ne présente aucun bord saillant et donc pas une configuration en marches d'escalier.

Les portées sont définies, en l'espèce, de sorte que chaque élément vient en contact avec la portée active de la came au moins par trois points non alignés entre eux, et ce quelle que soit la portée utilisée. On définit donc un plan d'appui de chaque élément sur la came. En l'espèce, on prévoit même un contact surfacique entre un tronçon de la portée de la came et la face interne du pied 26. Cet agencement assure une position stable et précise de l'élément sur la came.

On observe, par exemple sur les figures 7 et 8, que certains des éléments 12 n'ont pas leurs sommets 14 parallèles à l'axe 6. Cela résulte du fait que la portée contre laquelle ces éléments sont en appui n'est pas elle-même parallèle à cet axe. L'inclinaison éventuelle du sommet 14 par rapport à l'axe 6 est permise d'une part par la flexibilité de la bande 20 qui maintient les éléments 12 attachés les uns aux autres tout en leur permettant de basculer les uns par rapport aux autres autour d'un axe parallèle aux axes 68 et 70, et par ailleurs par les liaisons pivot des organes de rappel qui assurent ce rappel sans interdire le basculement éventuel de l'élément par rapport au socle autour dé ces axes.

En outre, comme illustré à la figure 9, les faces internes 80 et 82 de la tête 28 et du pied 26 qui s'étendent en regard de la bande ont une forme courbe convexe sur chaque zone de ces faces s'étendant de la vis 32 jusqu'à la face avant ou la face arrière de l'élément. Les faces 80 et 82 ont donc une forme qui les éloigne de la bande à partir de la vis lorsque la bande est dans une configuration plane. La hauteur de la zone d'interposition recevant la bande va donc en augmentant à mesure qu'on s'éloigne de la vis 32. On offre là une possibilité supplémentaire de débattement à l'élément 12 qui facilite encore son positionnement contre la portée de la came.

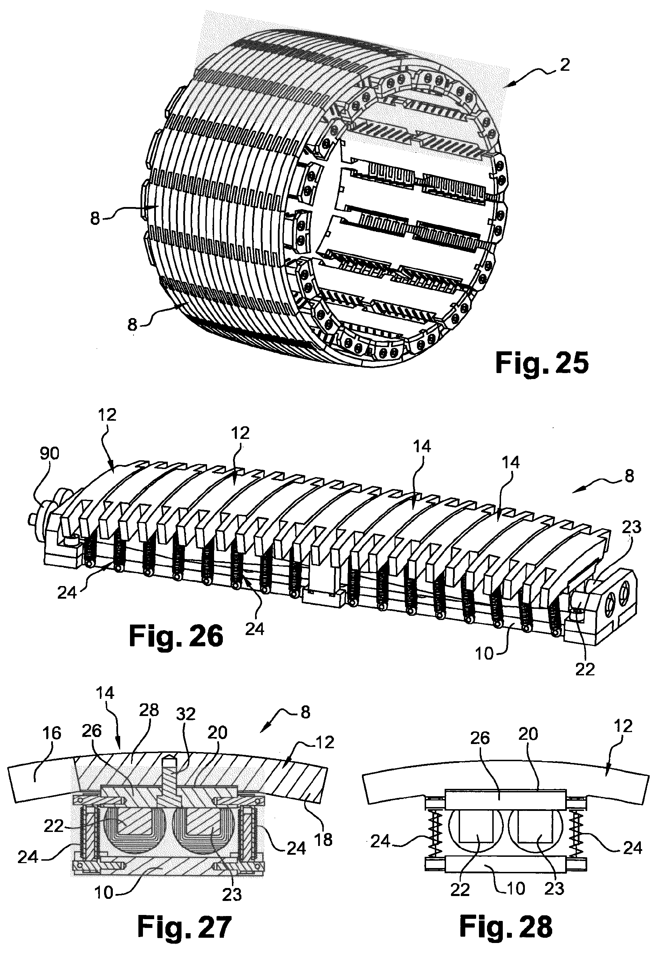

On a illustré aux figures 25 à 28 un deuxième mode de réalisation du support selon l'invention.

Dans son principe, ce support est identique au précédent mis à part que chaque organe 8 porte non pas une unique came 22 mais deux cames 22 et 23 disposées côte à côte en étant interposées entre le socle et les éléments 12 en lieu et place de la came unique du précédent mode. Le socle et les éléments ont été élargis en direction circonférentielle de façon à permettre la réception des deux cames. Comme précédemment, chacune des cames est montée mobile à rotation sur le socle et présente plusieurs portées se succédant sur le pourtour de la came. Les cames sont disposées l'une à côté de l'autre avec leurs extrémités en coïncidence et leurs axes longitudinaux parallèles. Comme précédemment, chaque came définit avec la portée active, à savoir celle qui est la plus distante de l'axe 6, une face d'appui pour les éléments 12. En l'espèce, chaque élément vient en appui simultanément contre les deux cames, la partie gauche de l'élément venant en appui contre une des cames tandis que sa partie droite vient en appui contre l'autre. Ici, chacune des cames présente quatre portées régulièrement réparties autour de l'axe de la came et séparées les unes des autres par un quart de tour. Pour changer la portée active, il suffit de faire tourner la came d'un quart de tour autour de son axe.

En l'espèce, on peut rendre mutuellement dépendantes les rotations des deux cames, par exemple au moyen d'un système à poulie et courroie, de sorte que la rotation de l'une des cames entraîne la rotation de l'autre et inversement. On change ainsi la portée active des deux cames simultanément.

Dans ces deux modes de réalisation, on voit que chaque organe comprend un dispositif composite associant la flexibilité de la bande de faible épaisseur à la rigidité de la pièce massive formant le pied de chaque élément, et que la déformation permise par ce dispositif est similaire à celle d'une colonne vertébrale.

Les différentes portées étant réparties sur des azimuts différents de la came, pour l'usinage de cette dernière, on peut partir d'une ébauche de forme cylindrique à section circulaire. On usine, par exemple par roulage le long de la came, une première des portées à un certain azimut. Ensuite, on fait tourner la came à l'azimut suivant et on usine à nouveau par roulage la portée correspondante. On procède plusieurs fois de cette façon jusqu'à réalisation de toutes les portées.

C'est l'élément central 12 qui donne l'altitude maximale de la forme galbée du support, ses voisins étant associés aux points les plus hauts de la portée correspondante sur la came. Il est le seul qui n'est pas en appui sur la came et dont la position est invariable quelle que soit la forme donnée au support. De plus, plus on s'éloigne de cet élément central, plus l'élément considéré présente une surface de contact importante avec la portée active de la came, pourvu que cette portée soit galbée.

Les organes de rappel 24 ont pour objet notamment de compenser la raideur de la bande. Les deux liaisons pivot donnent deux degrés de liberté de mouvement à l'élément par rapport au socle. Les organes 24 dotés de leur armature assurent la stabilité des éléments 12 en empêchant leur basculement sous sollicitation et en garantissant leur positionnement.

La lame métallique flexible participe également à la stabilité du système. Plus elle est courbée en flexion, plus elle est rigide en torsion. Il n'y a qu'en présence de la portée plate qu'elle n'est pas courbée et ne participe donc pas ou peu à la rigidité en torsion du système.

La version de l'invention associant une seule came à chaque organe a pour avantage de réaliser un gain de masse. La version à plusieurs cames est intéressante lors de la pose de produits avec de fortes sollicitations. Elle est certes plus lourde et créé donc un effort centrifuge plus important lors de la rotation du support mais elle permet d'obtenir deux appuis pour chaque élément de forme sur les cames. Cela confère au support une plus grande stabilité.

L'invention n'engendre aucune limitation dans la forme de la surface que l'on souhaite générer avec le support. Il suffit en effet de réaliser pour chaque organe au moins une came ayant la forme correspondante pour que la forme souhaitée soit obtenue sur le support recevant l'ébauche en cours de réalisation.

Le support selon l'invention sert pour l'assemblage d'une ébauche crue de pneumatique. Cette ébauche est réalisée en assemblant les uns aux autres et en fixant entre eux plusieurs éléments de gomme crue tels que des nappes. La gomme comprend un mélange d'élastomère synthétique, d'élastomère naturel, d'adjuvants et d'huile. L'assemblage peut aussi mettre en oeuvre des pièces de renfort en métal ou en textile.

Lors de la mise en oeuvre du procédé de l'invention pour la fabrication de l'ébauche, on procède ici comme suit:
- on suppose par exemple que la face d'appui externe du support 2 a initialement une forme cylindrique;
- on installe sur cette face plusieurs nappes de gomme et on soude les nappes entre elles;
- ensuite, on fait passer la ou les cames de chaque organe de la position dans laquelle la portée active est plate à une position dans laquelle la portée active est galbée de façon à donner une forme galbée à la face d'appui du support 2. Cela a pour effet de déformer l'ébauche en cours de construction;
- on poursuit ensuite l'assemblage de l'ébauche sur le support ayant maintenant cette géométrie, par exemple en ajoutant à l'ébauche d'autres éléments de gomme que l'on fixe aux précédents.

On peut pareillement modifier encore une ou plusieurs fois la forme du support 2 selon les nécessités de la fabrication de l'ébauche.

Lors d'une étape ultérieure, l'ébauche de gomme crue fait l'objet d'une étape de cuisson pour la vulcanisation de la gomme en vue de l'obtention du pneumatique.

Si on ne souhaite pas générer de tension dans l'ébauche lors du passage d'une portée active plate à une portée active galbée, la portée plate doit être celle ayant la plus grande distance à l'axe de la came. On réalisera donc les portées galbées en leur donnant des dimensions radiales inférieures à celles de la portée plate. Si au contraire, on souhaite générer une légère tension au centre de l'ébauche, il suffit d'abaisser un peu la portée plate par rapport au point le plus haut d'au moins l'une des portées galbées.

Le support selon l'invention peut aussi servir à fabriquer des ébauches de formes différentes destinées à constituer des pneumatiques de modèles différents.

Un autre avantage de l'invention est qu'elle ne requiert pas d'opération de réglage après que l'on a changé la forme de la face du support par rotation des cames.

Bien entendu, on pourra apporter à l'invention de nombreuses modifications sans sortir du cadre de celle-ci.

On pourra mettre en oeuvre indépendamment l'une de l'autre d'une part la bande flexible par l'intermédiaire de laquelle les éléments sont attachés les uns aux autres, et d'autre part la came apte à occuper une position quelconque parmi au moins deux positions qui sont l'image l'une de l'autre par une rotation, la came définissant des positions des éléments par rapport au socle et telles que, pour au moins certains des éléments, les positions de l'élément associées aux positions respectives de la came sont différentes l'une de l'autre.

## Revendications

1. Organe (8) pour l'assemblage d'une ébauche crue de pneumatique, **caractérisé en ce qu'**il comprend :
- des moyens de fixation à une embase (4),
- un socle (10),
- des éléments externes (12) montés mobiles par rapport au socle, et
- au moins une came (22, 23) apte à occuper une position quelconque parmi au moins deux positions qui sont l'image l'une de l'autre par une rotation, dans lesquelles la came définit des positions des éléments par rapport au socle et telles que, pour au moins certains des éléments, les positions de l'élément associées aux positions respectives de la came sont différentes l'une de l'autre.

2. Support (2) d'assemblage d'une ébauche crue de pneumatique, **caractérisé en ce qu'**il comprend une embase (4) à symétrie de révolution et des organes (8) selon la revendication précédente fixés à l'embase.

3. Support selon la revendication précédente dans lequel chaque organe (8) est agencé de sorte que les positions de la ou chaque came (22, 23) sont l'image l'une de l'autre par une rotation autour d'un axe (42) de la came.

4. Support selon au moins l'une quelconque des revendications 2 et 3 dans lequel, dans chaque organe, la ou chaque came (22, 23) est montée mobile à rotation par rapport au socle.

5. Support selon au moins l'une quelconque des revendications 2 à 4 dans lequel chaque organe (8) est agencé de sorte que, dans au moins une des positions de la ou chaque came, les éléments forment une face de support externe à profil galbé dans un plan radial à un axe principal (6) de l'embase.

6. Support selon au moins l'une quelconque des revendications 2 à 5 dans lequel chaque organe (8) est agencé de sorte que, dans une des positions de la ou chaque came, les éléments forment une face de support externe à profil rectiligne dans un plan radial à un axe principal (6) de l'embase.

7. Support selon la revendication précédente dans lequel chaque organe (8) est agencé de sorte que, dans la position de la ou chaque came associée au profil rectiligne, pour au moins certains des éléments, et de préférence tous les éléments, une distance entre une face externe (14) de l'élément formant la face de support et l'axe (6) de l'embase est inférieure à la distance entre cette face et l'axe lorsque la came occupe au moins une autre des positions.

8. Support selon au moins l'une quelconque des revendications 2 à 7 dans lequel chaque organe comprend des moyens de rappel (24) des éléments en direction de la ou chaque came.

9. Support selon au moins l'une quelconque des revendications 2 à 8 dans lequel chaque organe (8) est agencé de sorte que la ou chaque came, dans au moins une de ses positions, définit un plan de contact avec chaque élément parmi au moins certains des éléments.

10. Support selon au moins l'une quelconque des revendications 2 à 9 dans lequel chaque organe (8) est agencé de sorte que la ou chaque came, dans au moins une de ses positions, présente, pour au moins certains des éléments, une surface de contact (50-58) avec l'élément.

11. Support selon la revendication précédente dans lequel les surfaces de contact (50-58) sont définies par au moins une face de la came venant en contact avec plusieurs éléments (12) simultanément.

12. Support selon au moins l'une quelconque des revendications 2 à 11 dans lequel les cames (22, 23) sont au moins au nombre de deux dans au moins certains des organes, les cames définissant conjointement des positions respectives des mêmes éléments.

13. Support selon la revendication précédente dans lequel chacun des organes comprenant deux cames (22, 23) comprend des moyens de liaison des cames de l'organe entre elles de sorte qu'une rotation de l'une quelconque des cames par rapport au socle entraîne une rotation de l'autre came par rapport au socle.

14. Support selon au moins l'une quelconque des revendications 2 à 13 dans lequel chaque organe comprend une bande flexible (20) par l'intermédiaire de laquelle les éléments sont attachés les uns aux autres.

15. Procédé d'assemblage d'une ébauche crue de pneumatique, **caractérisé en ce que**:
- on exécute au moins une opération d'assemblage d'une ébauche crue en contact avec des éléments (12) d'organes (8) comme définis dans au moins l'une quelconque des revendications 1 à 14, organes fixés à une embase (4) à symétrie de révolution d'un support (2),
- on déplace au moins une came (22, 23) de chaque organe d'une position de départ à une position d'arrivée qui est l'image de la position de départ par une rotation de façon à déplacer au moins certains des éléments par rapport au socle, et
- on exécute une autre opération d'assemblage de l'ébauche sur le support.

## Patentansprüche

1. Bauteil (8) zum Zusammenbau eines Luftreifenrohlings, **dadurch gekennzeichnet, dass** es enthält:
- Einrichtungen zur Befestigung an einem Unterteil (4),
- einen Sockel (10),
- äußere Elemente (12), die bezüglich des Sockels beweglich montiert sind, und
- mindestens eine Nocke (22, 23), die eine beliebige Stellung unter mindestens zwei Stellungen einnehmen kann, die die Abbildung voneinander durch eine Drehung sind, in denen die Nocke Stellungen der Elemente bezüglich des Sockels definiert, und die derart sind, dass für mindestens bestimmte der Elemente die Stellungen des Elements, die den jeweiligen Stellungen der Nocke zugeordnet sind, sich voneinander unterscheiden.

2. Träger (2) für den Zusammenbau eines Luftreifenrohlings, **dadurch gekennzeichnet, dass** er ein Unterteil (4) mit Drehsymmetrie und Bauteile (8) nach dem vorhergehenden Anspruch enthält, die am Unterteil befestigt sind.

3. Träger nach dem vorhergehenden Anspruch, wobei jedes Bauteil (8) so angeordnet ist, dass die Stellungen der oder jeder Nocke (22, 23) die Abbildung voneinander durch eine Drehung um eine Achse (42) der Nocke sind.

4. Träger nach mindestens einem der Ansprüche 2 und 3, wobei in jedem Bauteil die oder jede Nocke (22, 23) bezüglich des Sockels drehbeweglich montiert ist.

5. Träger nach mindestens einem der Ansprüche 2 bis 4, wobei jedes Bauteil (8) so angeordnet ist, dass in mindestens einer der Stellungen der oder jeder Nocke die Elemente eine äußere Trägerseite mit gewölbtem Profil in einer Ebene radial zu einer Hauptachse (6) des Unterteils bilden.

6. Träger nach mindestens einem der Ansprüche 2 bis 5, wobei jedes Bauteil (8) so angeordnet ist, dass in einer der Stellungen der oder jeder Nocke die Elemente eine äußere Trägerseite mit geradlinigem Profil in einer Ebene radial zu einer Hauptachse (6) des Unterteils bilden.

7. Träger nach dem vorhergehenden Anspruch, wobei jedes Bauteil (8) so angeordnet ist, dass in der Stellung der oder jeder Nocke, die dem geradlinigen Profil zugeordnet ist, für mindestens bestimmte der Elemente, und vorzugsweise alle Elemente, ein Abstand zwischen einer Außenseite (14) des die Trägerseite bildenden Elements und der Achse (6) des Unterteils kleiner ist als der Abstand zwischen dieser Seite und der Achse, wenn die Nocke mindestens eine andere der Stellungen einnimmt.

8. Träger nach mindestens einem der Ansprüche 2 bis 7, wobei jedes Bauteil Rückstelleinrichtungen (24) der Elemente in Richtung der oder jeder Nocke enthält.

9. Träger nach mindestens einem der Ansprüche 2 bis 8, wobei jedes Bauteil (8) so angeordnet ist, dass die oder jede Nocke in mindestens einer ihrer Stellungen eine Kontaktebene mit jedem Elemente unter mindestens bestimmten der Elemente definiert.

10. Träger nach mindestens einem der Ansprüche 2 bis 9, wobei jedes Bauteil (8) so angeordnet ist, dass die oder jede Nocke in mindestens einer ihrer Stellungen für zumindest bestimmte der Elemente eine Kontaktfläche (50-58) mit dem Element aufweist.

11. Träger nach dem vorhergehenden Anspruch, wobei die Kontaktflächen (50-58) durch mindestens eine Seite der Nocke definiert werden, die gleichzeitig mit mehreren Elementen (12) in Kontakt kommt.

12. Träger nach mindestens einem der Ansprüche 2 bis 11, wobei es in mindestens bestimmten der Bauteile mindestens zwei Nocken (22, 23) gibt, wobei die Nocken zusammen jeweilige Stellungen der gleichen Elemente definieren.

13. Träger nach dem vorhergehenden Anspruch, wobei jedes der zwei Nocken (22, 23) enthaltenden Bauteile Verbindungseinrichtungen der Nocken des Bauteils untereinander enthält, so dass eine Drehung einer beliebigen der Nocken bezüglich des Sockels eine Drehung der anderen Nocke bezüglich des Sockels nach sich zieht.

14. Träger nach mindestens einem der Ansprüche 2 bis 13, wobei jedes Bauteil ein elastisches Band (20) enthält, mittels dessen die Elemente aneinander befestigt sind.

15. Verfahren zum Zusammenbau eines Luftreifenrohlings, **dadurch gekennzeichnet, dass**:
- mindestens ein Zusammenbauvorgang eines Rohlings in Kontakt mit Elementen (12) von Bauteilen (8) wie in mindestens einem der Ansprüche 1 bis 14 definiert durchgeführt wird, wobei die Bauteile an einem Unterteil (4) mit Drehsymmetrie eines Trägers (2) befestigt sind,
- mindestens eine Nocke (22, 23) jedes Bauteils von einer Ausgangsstellung in eine Ankunftsstellung verschoben wird, die die Abbildung der Ausgangsstellung durch eine Drehung ist, um mindestens bestimmte der Elemente bezüglich des Sockels zu verschieben, und
- ein weiterer Zusammenbauvorgang des Rohlings auf dem Träger durchgeführt wird.

## Claims

1. Member (8) for assembling a green tyre, **characterized in that** it comprises:
- means of attachment to a baseplate (4),
- a base (10),
- external elements (12) mounted with the ability to move with respect to the base, and
- at least one cam (22, 23) able to occupy at least any one of at least two positions which are the image of one another through rotation, in which positions the cam defines element positions with respect to the base and which are such that, in the case of at least some of the elements, the element positions associated with the respective positions of the cam differ from one another.

2. Support (2) for assembling a green tyre, **characterized in that** it comprises a baseplate (4) with symmetry of revolution and members (8) according to the preceding claims that are fixed to the baseplate.

3. Support according to the preceding claim, in which each member (8) is arranged in such a way that the positions of the or each cam (22, 23) are the image of one another through rotation about an axis (42) of the cam.

4. Support according to at least either one of Claims 2 and 3, in which, in each member, the or each cam (22, 23) is mounted with the ability to rotate with respect to the base.

5. Support according to at least any one of Claims 2 to 4, in which each member (8) is arranged in such a way that, in at least one of the positions of the or each cam, the elements form an external support face with a curved profile in a plane radial to a main axis (6) of the baseplate.

6. Support according to at least any one of Claims 2 to 5, in which each member (8) is arranged in such a way that, in one of the positions of the or each cam, the elements form an external support face with a rectilinear profile in a plane radial to a main axis (6) of the baseplate.

7. Support according to the preceding claim, in which each member (8) is arranged in such a way that, in the position of the or each cam that is associated with the rectilinear profile, in the case of at least some of the elements and preferably all the elements, a distance between an external face (14) of the element forming the support face and the axis (6) of the baseplate is less than the distance between this face and the axis when the cam is in at least one of the other positions.

8. Support according to at least any one of Claims 2 to 7, in which each member comprises return means (24) returning the elements towards the or each cam.

9. Support according to at least any one of Claims 2 to 8, in which each member (8) is arranged in such a way that the or each cam, in at least one of its positions, defines a plane of contact with each of at least some of the elements.

10. Support according to at least any one of Claims 2 to 9, in which each member (8) is arranged in such a way that the or each cam, in at least one of its positions, has, in the case of at least some of the elements, a contact surface (50-58) for contact with the element.

11. Support according to the preceding claim, in which the contact surfaces (50-58) are defined by at least one face of the cam that comes into contact with several elements (12) simultaneously.

12. Support according to at least any one of Claims 2 to 11, in which the cams (22, 23) are at least two in number in at least some of the members, the cams jointly defining respective positions of these same elements.

13. Support according to the preceding claim, in which each of the members comprising two cams (22, 23) comprises connecting means for joining the cams of the member together so that rotation of any one of the cams with respect to the base causes the other cam to rotate with respect to the base.

14. Support according to at least any one of Claims 2 to 13, in which each member comprises a flexible strip (20) by means of which the elements are attached to one another.

15. Method of assembling a green tyre, **characterized in that**:
- at least one green-tyre-building operation is carried out in contact with elements (12) of members (8) as defined in at least any one of Claims 1 to 14, which members are fixed to a baseplate (4) with symmetry of revolution belonging to a support (2),
- at least one cam (22, 23) of each member is moved from a starting position to an end position which is the image of the starting position through a rotation, so as to move at least some of the elements with respect to the base, and
- another green-tyre-building operation is carried out with the tyre on the support.
